# EUROPÄISCHE PATENTSCHRIFT

(11) **EP 1 289 089 B1**
(45) Veröffentlichungstag und Bekanntmachung des Hinweises auf die Patenterteilung: **09.05.2007**
(21) Anmeldenummer: 02000319.0
(22) Anmeldetag: 04.01.2002
(51) Int. Cl.: H02G 3/18

(54) **Geräteeinsatz**
Flush mounted apparatus holder
Support d'appareil encastré

(30) Priorität: 03.09.2001 DE 20022577 U
(43) Veröffentlichungstag der Anmeldung: 05.03.2003
(73) Patentinhaber: OBO Bettermann GmbH & Co. KG, 58710 Menden (DE)
(72) Erfinder: Raschke, Jörg, 51674 Wiehl (DE)
(74) Vertreter: Patentanwälte Ruff, Wilhelm, Beier, Dauster & Partner

(56) Entgegenhaltungen:
- EP-A- 0 824 284
- DE-U- 6 906 706

## Beschreibung

Die Erfindung betrifft einen Geräteeinsatz mit einem Kassettenrahmen zum Aufnehmen von Installationsgeräten und einem auf den Kassettenrahmen aufsetzbaren Deckel, wobei der Kassettenrahmen und/oder der Deckel eine Grundplatte und einen im wesentlichen senkrecht zur Grundplatte angeordneten und mit dieser verbundenen Rand aufweisen (DE-U-6906706).

Bekannte Geräteeinsätze weisen im allgemeinen einen einstückigen Grundkörper auf, der aus Kunststoffspritzguss hergestellt ist und eine Grundplatte mit hiervon ausgehenden Rastleitern zum Aufnehmen von Gerätebechern oder Installationsgeräten aufweist. An die Grundplatte ist ein umlaufender Rand angeformt, der seinerseits an seinem oberen Ende mit einem umlaufenden Vorsprung versehen ist. Der Vorsprung dient dazu, den Geräteeinsatz in eine passende Öffnung eines Fußbodens oder einer Einbaueinheit eines Installationskanals einzuhängen. Zum Einhängen und Befestigen an unterschiedlichen Fußböden sind jeweils unterschiedliche Befestigungsvorrichtungen erforderlich. Bekannte Geräteeinsätze weisen einen schwenkbar angeordneten Deckel mit klappbarem Schnurauslass auf. Sowohl der Deckel als auch der Grundkörper erfordern zu ihrer Herstellung teure Spritzgusswerkzeuge.

Mit der Erfindung soll ein stabiler und dabei kostengünstig herzustellender Geräteeinsatz geschaffen werden.

Erfindungsgemäß ist hierzu ein Geräteeinsatz mit einem Kassettenrahmen zum Aufnehmen von Installationsgeräten und einem auf den Kassettenrahmen aufsetzbaren Deckel vorgesehen, wobei der Kassettenrahmen und/oder der Deckel eine Grundplatte und einen im wesentlichen senkrecht zur Grundplatte angeordneten und mit dieser verbundenen Rand aufweisen, bei der der Rand einen Materialstreifen aufweist und die Grundplatte und der Materialstreifen mittels zueinander passender Vorsprünge und/oder Ausnehmungen formschlüssig miteinander verbunden sind.

Durch diese Maßnahmen kann eine sichere Verbindung zwischen Rand und Grundplatte erreicht werden, ohne dass eine Löt-, Schweiß- oder Klebeverbindung zwischen Rand und Grundplatte erforderlich wäre. Auch kann auf zeit- und kostenintensive Schraub- oder Nietverbindungen verzichtet werden. Der Rand und die Grundplatte können dadurch als Blechbiegeteil rationell hergestellt werden. Da Grundplatte und Rand getrennte Bauteile sind, kann der Rand in einem anderen Material als der Grundkörper ausgeführt werden. Dies ist dann vorteilhaft, wenn der, nach Aufbringen eines Fußbodenbelags sichtbare Rand optisch zum Fußbodenbelag passen soll. Der Rand dient auch als Anlegerand beim Verlegen des Fußbodenbelags. Da der Rand aus einem einfachen Materialstreifen bestehen kann, ist dieser einfach und kostengünstig herzustellen. Trotzdem wird durch die formschlüssige Verbindung von Grundplatte und Materialstreifen ein stabiler Verbund geschaffen.

In Weiterbildung der Erfindung ist der Materialstreifen an seiner Schmalseite mit wenigstens einem Vorsprung und an seiner anderen Schmalseite mit wenigstens einer passenden Ausnehmung versehen, wobei der Vorsprung im an der Grundplatte montierten Zustand des Materialstreifens in eine Hinterschneidung der Ausnehmung eingreift.

Dadurch lässt sich eine formschlüssige Verbindung der Schmalseiten des Materialstreifens ohne Löten, Schweißen oder Kleben erreichen. Indem der Vorsprung in eine Hinterschneidung der Ausnehmung eingreift, können sowohl Zug- als auch Druckkräfte in der Ebene des Materialstreifens übertragen werden. Die Verbindung des Materialstreifens an seinen Schmalseiten und seine Verbindung mit der Grundplatte an einer Längsseite wirken zusammen, so dass ein stabiler Verbund aus Rand und Grundplatte geschaffen wird. Dieser stabile Verbund wird alleine durch Formschlussverbindungen erreicht. Gegebenenfalls können Schweißpunkte zur Sicherung der Formschlussverbindungen vorgesehen werden.

In Weiterbildung der Erfindung ist der Materialstreifen in die dem montierten Zustand an der Grundplatte entsprechende Position vorgespannt.

Dadurch bewegt sich der Materialstreifen bei der Montage selbsttätig in seine montierte Endposition. Bei entsprechend großer Vorspannung, beispielsweise kann der Materialstreifen aus zwei Millimeter dickem Edelstahlblech ausgeführt werden, ergibt sich ein guter Halt in der montierten Endposition, und es sind keine weiteren Sicherungsmaßnahmen für eine Befestigung des Rands an der Grundplatte mehr erforderlich.

In Weiterbildung der Erfindung ist die Grundplatte im wesentlichen kreisförmig und weist an ihrem Umfang sich radial nach außen erstreckende und in der Ebene der Grundplatte rechteckförmige Vorsprünge auf, die formschlüssig in Ausnehmungen des Materialstreifens eingreifen.

Indem sich die Vorsprünge an der Grundplatte radial nach außen erstrecken, kann die Grundplatte mittels eines Lasers aus Plattenmaterial ausgeschnitten oder als Stanzteil gefertigt werden. Insbesondere ist kein Abbiegen der Vorsprünge erforderlich.

In Weiterbildung der Erfindung weist der Kassettenrahmen ein als einstückiges Blechbiegeteil ausgebildetes Basisteil auf, das die Grundplatte und von dieser ausgehende, abgebogene Rastleitern aufweist.
Dadurch ist es möglich, den Kassettenrahmen aus lediglich zwei miteinander verbundenen Blechbiegeteilen aufzubauen, nämlich dem Basisteil und dem Rand. Die Rastleitern sind zur Anordnung von Installationsgeräten oder Gerätebechern für Installationsgeräte vorgesehen. Die Herstellung als Blechbiegeteil ist kostengünstig.

In Weiterbildung der Erfindung weist das als einstückiges Blechbiegeteil ausgebildete Basisteil Mittel zum Abstützen des Kassettenrahmens auf einer Oberfläche auf, die wenigstens einen von der Grundplatte ausgehenden abgekröpften Materialsteifen aufweisen, der einen ersten, senkrecht zur Grundplatte verlaufenden Stützabschnitt, einen sich an den ersten Stützabschnitt anschließenden, im wesentlichen parallel zur Grundplatte verlaufenden Halteabschnitt und einen zweiten Stützabschnitt aufweist, der sich ausgehend von dem Halteabschnitt der in Richtung auf die Grundplatte erstreckt und dessen Ende in unmittelbarer Nähe der Grundplatte angeordnet ist.

Dadurch können die Mittel zum Abstützen des Kassettenrahmens aus einem von der Grundplatte ausgehenden Materialstreifen geformt werden. Die spezielle Formgebung des Materialstreifens erlaubt es, dass sich die Mittel zum Abstützen des Kassettenrahmens an der Unterseite der Grundplatte abstützen, ohne dass hierzu eine Löt- oder Schweißverbindung erforderlich wäre. Vorteilhafterweise sind in dem Halteabschnitt Einstellschrauben angeordnet, durch die der Kassettenrahmen höhenvariabel auf einer Bodenoberfläche abgestützt werden kann.

In Weiterbildung der Erfindung ist der zweite Stützabschnitt in einem Winkel kleiner als 180°, insbesondere 90°, zum ersten Stützabschnitt angeordnet. Dadurch wird eine stabile Anordnung erreicht.

In Weiterbildung der Erfindung ist der Halteabschnitt mit einer Gewindebuchse versehen und in axialer Verlängerung der Gewindebuchse ist in der Grundplatte eine Ausnehmung angeordnet.

Durch diese Maßnahmen können von der Oberseite der Grundplatte aus Einstellschrauben in die Gewindebuchse eingedreht und verstellt werden.

In Weiterbildung der Erfindung ist der Deckel mit einem aufklappbaren Schnurauslass versehen. Vorteilhafterweise ist die Grundplatte des Deckels als Blechbiegeteil ausgebildet und weist einen senkrecht zur Ebene der Grundplatte abgebogenen Blechstreifen auf, der seinerseits drei Teilabschnitte aufweist, die drei miteinander verbundene Seiten eines rechteckförmigen Rahmens zum Aufnehmen einer Schnurauslassklappe bilden.

Auf diese Weise kann eine Halterung für die Schnurauslassklappe mittels eines einstückigen Blechbiegeteils realisiert werden.

In Weiterbildung der Erfindung ist jede der beiden Schmalseiten des den Rand des Deckels bildenden Materialstreifens mit jeweils einer Schmalseite des von der Grundplatte abgebogenen Blechstreifens verbunden. Neben einer Verbindung einer Längsseite des Materialstreifens mit der Grundplatte müssen dadurch nur die beiden Schmalseiten des Rands jeweils mit dem rechteckförmigen Rahmen an der Grundplatte verbunden werden, um eine umlaufende Begrenzung an dem Deckel zu bilden und eine stabile Deckeleinheit zu schaffen. Die umlaufende Begrenzung an dem Deckel kann beispielsweise dafür vorgesehen sein, einen Bodenbelag aufzunehmen. Die Verbindungen können beispielsweise als Nietverbindungen mit zusätzlichem Formschluss zwischen Vorsprüngen und Ausnehmungen ausgebildet sein.

In vorteilhafter Weise sind bei einer Geräteeinsatz mit Einstellbolzen zum höhenvariablen Abstützen eines Basisteils diese an ihrem einer Bodenoberfläche zugewandten Ende mit einem Kopf versehen, an dem ein plattenförmiges Fußelement mittels aus der Grundfläche des Fußelements herausgebogener Vorsprünge befestigt ist.

Dadurch kann die Aufstandsfläche der Einstellbolzen vergrößert werden, um eine sicher Abstützung, gegebenenfalls befestigbar, auf der Bodenoberfläche zu erreichen. Dennoch können die Einstellbolzen als Normteile mit konventionellem Schraubenkopf ausgebildet sein. Das Fußelement kann als Blechstanzteil ausgebildet sein und wird mittels der Vorsprünge an die Einstellbolzen angeklemmt. Da der Geräteeinsatz auf einer Bodenoberfläche einer Decke abgestützt wird, werden für unterschiedliche Fußböden, zu denen der Geräteeinsatz bündig angeordnet wird, keine unterschiedlichen Befestigungsvorrichtungen benötigt.

In vorteilhafter Weise ist bei einem Geräteeinsatz mit einem Deckel mit einer Schnurauslassklappe die Schnurauslassklappe mittels zweier, vom Innenraum der Schnurauslassklappe her in eine Wandung des Deckels einbringbaren Lagerzapfen schwenkbar an dem Deckel gelagert.

Dadurch ergibt sich die Möglichkeit, die Schnurauslassklappe nachträglich an dem Deckel zu befestigen, ohne dass eine der Schnurauslassklappe abgewandte Seite der Wandung des Deckels zugänglich sein müsste. Auf diese Weise kann eine Schnurauslassklappe auch dann noch an dem Deckel angebracht werden, wenn der Deckel bereits mit einem Bodenbelag versehen ist.

In vorteilhafter Weise sind die Lagerzapfen als Zylinderschrauben ausgebildet.

Dadurch können zur schwenkbaren Befestigung der Schnurauslassklappe Normteile verwendet werden.

In Weiterbildung der Erfindung kann die Schnurauslassklappe mittels einer Hülse mit einem federbelasteten Rastelement in wenigstens einer Stellung arretiert werden.

Das Vorsehen einer Hülse mit einem federbelasteten Rastelement ermöglicht es, dass im Deckel oder der Schnurauslassklappe einfache Bohrungen oder Ausnehmungen zum Definieren der Raststellungen vorgesehen werden können.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine perspektivische Ansicht einer bevorzugten Ausführungsform eines erfindungsgemäßen Geräteeinsatzes,
- Fig. 2: eine perspektivische Ansicht eines Kassettenrahmens des Geräteeinsatzes der Fig. 1,
- Fig.3: den Kassettenrahmen der Fig. 2 in auseinandergezogener Darstellung,
- Fig. 4: eine perspektivische Darstellung des Deckels des Geräteeinsatzes der Fig. 1 und
- Fig. 5: eine perspektivische Darstellung des Deckels des Geräteeinsatzes der Fig. 1 in auseinandergezogener Darstellung.

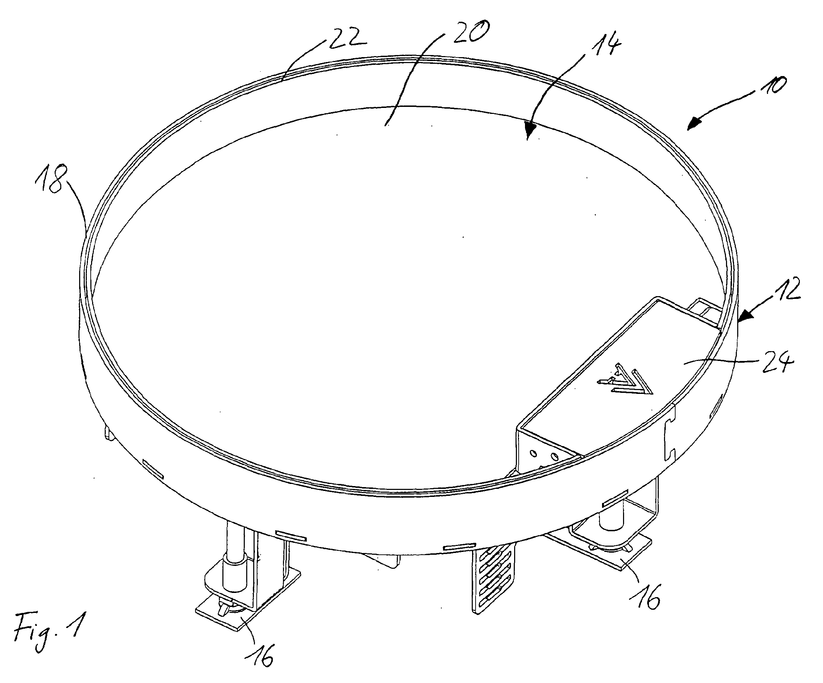

In der perspektivischen Darstellung der Fig. 1 ist ein erfindungsgemäßer Geräteeinsatz 10 gemäß einer bevorzugten Ausführungsform der Erfindung zu erkennen. Der Geräteeinsatz 10 ist dafür vorgesehen, fußbodeneben eingebaut zu werden, beispielsweise in einen Hohlraumboden oder in eine Einbaueinheit eines Installationskanals. Der Geräteeinsatz 10 weist einen Kassettenrahmen 12 sowie einen Deckel 14 auf. Der Kassettenrahmen 12 kann sich mit Standfüßen 16 auf einer Deckenoberfläche abstützen, und eine Oberkante eines Randes 18 des Kassettenrahmens 12 kann bündig mit einer Fußbodenoberfläche verlaufen. Der Rand 18 definiert eine kreisförmige Ausnehmung, in die der Deckel 14 eingesetzt werden kann. Der Deckel 14 weist eine Grundplatte 20 sowie einen kreisförmigen Rand 22 auf, wobei der Deckelrand 22 und die Grundplatte 20 eine Vertiefung definieren, die zur Aufnahme eines Fußbodenbelags vorgesehen ist. Im Deckel 14 ist eine Schnurauslassklappe 24 integriert, die in einer geschlossenen Stellung, die in der Fig. 1 dargestellt ist, sowie in einer geöffneten Stellung arretiert werden kann. Über die geöffnete Schnurauslassklappe 24 können in dem Geräteeinsatz 10 angeordnete Installationsgeräte mit Endgeräten in einem Gebäude verbunden werden.

Im eingebauten Zustand des Geräteeinsatzes 10 sind somit lediglich die Oberkante des Randes 18 des Kassettenrahmens, die Oberkante des Randes 22 des Deckels 14 sowie die Schnurauslassklappe 24 sichtbar. Beispielsweise besteht der Geräteeinsatz 10 vollständig aus Edelstahlblech der Stärke 2mm, wobei die im eingebauten Zustand sichtbaren Kanten der Ränder 18 und 22 sowie die Oberfläche der Schnurauslassklappe 24 gebürstet sein können.

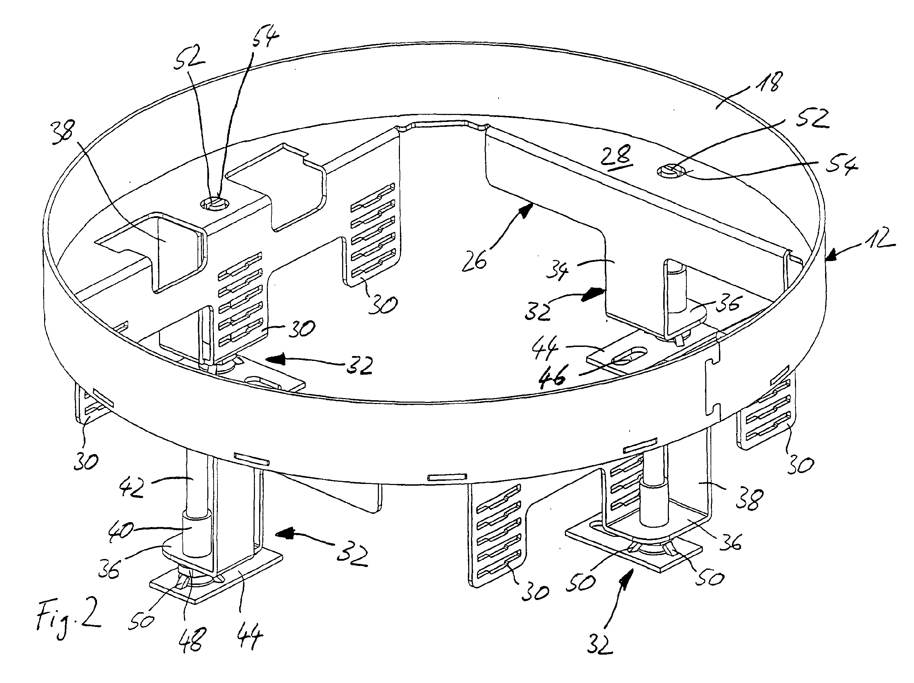

In der perspektivischen Darstellung der Fig. 2 ist der Kassettenrahmen 12 der Fig. 1 bei abgenommenem Deckel dargestellt. Der Kassettenrahmen 12 besteht aus dem Rand 18 und einem Basisteil 26. Sowohl der Rand 18 als auch das Basisteil 26 sind als einstückiges Blechbiegeteil ausgebildet. Das Basisteil 26 weist eine Grundplatte 28 auf, die parallel zur Oberkante des Randes 18 angeordnet ist. Im eingebauten Zustand des Kassettenrahmens 12 liegt die Grundplatte 28 somit parallel zu einer Fußbodenoberfläche. Die Grundplatte 28 ist mit einer zentralen, rechteckigen Ausnehmung versehen, in der Installationsgeräte oder Gerätebecher zur Anordnung von Installationsgeräten angeordnet werden können. Hierzu gehen an gegenüberliegenden Seiten der zentralen Ausnehmung von der Grundplatte 28 Rastleitern 30 aus, zwischen die Gerätebecher oder Installationsgeräte eingehängt werden können.

An jeder Seite der zentralen Ausnehmung ist jeweils mittig eine Stütze 32 vorgesehen, die jeweils einen von der Grundplatte 28 ausgehenden und gegenüber dieser rechtwinklig abgebogenen ersten Stützabschnitt 34, einen Halteabschnitt 36 sowie einen zweiten Stützabschnitt 38 aufweisen. Der Halteabschnitt 36 ist gegenüber dem ersten Stützabschnitt 34 rechtwinklig abgebogen und verläuft dadurch parallel zur Grundplatte 28. Ausgehend von dem Halteabschnitt 36 erstreckt sich der zweite Stützabschnitt 38 senkrecht nach oben und ist damit senkrecht zur Grundplatte 28 angeordnet. Zum ersten Stützabschnitt 34 ist der zweite Stützabschnitt 38 rechtwinklig angeordnet. Der erste Stützabschnitt 34 ist bei zwei an gegenüberliegenden Seiten der zentralen Ausnehmung liegenden Stützen 32 mit den Rastleitern 30 versehen. Der zweite Stützabschnitt 38 liegt mit seiner Schmalseite an der Unterseite der Grundplatte 28 an. Dadurch können die Stützen 32 große Stützkräfte aufnehmen, ohne dass der zweite Stützabschnitt 38 mit der Unterseite der Grundplatte 28 verschweißt, verlötet, verklebt oder verschraubt werden müsste.

In jedem Halteabschnitt 36 ist jeweils eine Gewindebuchse 40 angeordnet, in die ein Einstellgewindebolzen 42 eingedreht ist. An seinem der Grundplatte 28 abgewandten Ende des Einstellgewindebolzens 42 kann ein Fuß 44 vorgesehen sein. Jeder Fuß 44 weist ein Langloch 46 auf, um den Fuß 44 mittels Schrauben mit einer Deckenoberfläche zu verbinden. Zwischen dem Fuß 44 und dem Halteabschnitt 36 kann eine Kontermutter 48 auf dem Gewindeeinstellbolzen 42 vorgesehen sein. Der Gewindeeinstellbolzen 48 weist an seinem, der Grundplatte 28 abgewandten Ende einen an und für sich konventionellen Schraubenkopf auf, der mittels dreier Vorsprünge 50 in dem Fuß 44 auf diesem gehalten wird. Die Vorsprünge 50 können aus dem Fuß 44 an drei Seiten ausgestanzt und aus der Ebene des Fußes 44 herausgebogen sein. Ein der Grundplatte 28 zugewandtes Ende 52 der Einstellbolzen 42 ist mit einem Schraubschlitz versehen und axial zu einer jeweiligen Bohrung 54 in der Grundplatte 28 angeordnet. Die Gewindeeinstellbolzen 42 können dadurch von der Oberseite der Grundplatte 28 her mittels eines Schraubendrehers verstellt werden.

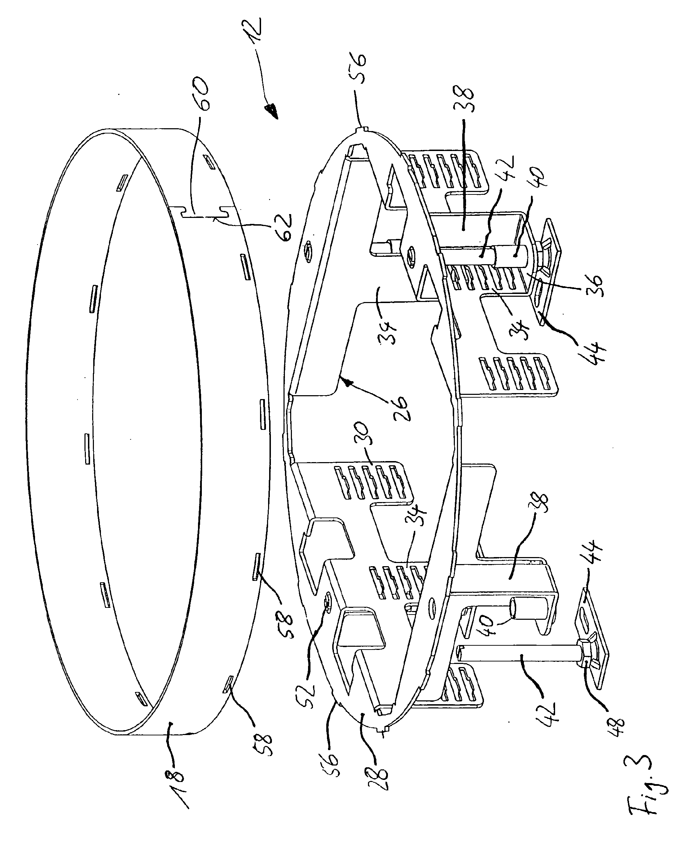

Die perspektivische Darstellung der Fig. 3 zeigt den Kassettenrahmen 12 in auseinandergezogener Darstellung. In der Fig. 3 gut zu erkennen ist, dass die kreisförmige Grundplatte 28 an ihrem äußeren Umfang gleichmäßig voneinander beabstandete Vorsprünge 56 aufweist. Die Vorsprünge 56 haben in der Ebene der Grundplatte 28 gesehen einen rechteckförmigen Querschnitt und verlaufen parallel zur Grundplatte 28. Die Grundplatte 28 kann mit den Vorsprüngen 28 daher aus Plattenmaterial ausgeschnitten werden, beispielsweise mittels eines Lasers. Auch die Rastleitern 30, die ersten Stützabschnitte 34, die Halteabschnitte 36 und die zweiten Stützabschnitte 38 können zusammen mit der Grundplatte 28 aus Plattenmaterial ausgeschnitten und dann in die in der Fig. 3 dargestellte Stellung abgebogen werden.

Der Rand 18 besteht aus einem rundgebogenen Materialstreifen und weist im Bereich seiner Längsseite, die im montierten Zustand am Umfang der Grundplatte 28 anliegt, gleichmäßig beabstandete rechteckförmige Ausnehmungen 58 auf. Die Ausnehmungen 58 sind dafür vorgesehen, die Vorsprünge 56 an der Grundplatte 28 aufzunehmen und dadurch eine formschlüssige Verbindung zwischen Grundplatte 28 und dem Rand 18 herzustellen. Da der Rand 18 als Materialstreifen ausgebildet ist, kann er ebenfalls aus Plattenmaterial mittels eines Lasers ausgeschnitten werden. Dies gilt auch für die Ausnehmungen 58. An seinen Schmalseiten ist der Materialstreifen, aus dem der Rand 18 gebildet ist, mit einem Vorsprung 60 bzw. einer passenden Ausnehmung 62 versehen. In dem in der Fig. 3 dargestellten Zustand greift der Vorsprung 60 in eine Hinterschneidung der Ausnehmung 62 ein, so dass der Materialstreifen zu einem Ring geschlossen ist und über seinen gesamten Umfang in der Ebene des Materialstreifens Zug- und Drückkräfte übertragen kann. Der dem Rand 18 bildende Materialstreifen wird nach dem Ausschneiden aus Plattenmaterial in einer Weise rundgebogen, dass er in die in der Fig. 3 dargestellte Stellung, die der an der Grundplatte 28 montierten Stellung entspricht, vorgespannt ist.
Zur Montage des Randes 18 an der Grundplatte 28 wird der Rand 18 aufgebogen, indem der Vorsprung 60 aus der Ausnehmung 62 herausgeführt wird. Der auf diese Weise aufgebogene Ring kann nun so an die Grundplatte 28 angesetzt werden, dass jeweils ein Vorsprung 56 in eine Ausnehmung 58 am Rand 18 eingreift. Um die Montage des Randes 18 an der Grundplatte 28 abzuschließen, wird der Vorsprung 60 wieder in die Ausnehmung 62 eingedrückt, wobei dies durch die Vorspannung des Randes 18 unterstützt wird. Hiernach bildet der Rand 18 mit der Grundplatte 28 des Basisteils 26 einen stabilen Verbund, ohne dass Löt-, Schweiß- oder Klebeverbindungen zwischen Grundplatte 28 und Rand 18 erforderlich wären.

Durch Vorsehen der Stützen 32 und der Gewindeeinstellbolzen 42 kann der Kassetten rahmen 12 gegenüber einer Bodenoberfläche höhenvariabel angeordnet werden. Die Halteabschnitte 36 mit den Gewindebuchsen 40 sind dabei um den vorgesehenen maximalen Höhenverstellbereich gegenüber der Grundplatte 28 abgesenkt. Beispielsweise beträgt der Abstand der Halteabschnitte 36 zur Grundplatte 28 fünfzig Millimeter. In der in der Fig. 2 dargestellten Stellung befindet sich der Kassettenrahmen 12 somit annähernd in der tiefstmöglichen Stellung, d.h. so nahe wie möglich an einer Bodenoberfläche, auf der die Füße 44 aufstehen. Selbst in dieser, tiefsten Stellung stehen die Köpfe der Gewindeeinstellbolzen 42 nicht oder nur unwesentlich über das Niveau der Oberfläche der Grundplatte 28 hinaus. Selbst in der in der Fig. 2 dargestellten tiefsten Stellung kann somit der Deckel in den Kassettenrahmen 12 eingelegt werden, ohne dass die Gewindeeinstellbolzen 42 oberhalb der Grundplatte 28 gekürzt werden müssten. Durch Eindrehen der Gewindeeinstellbolzen 42 in die Gewindebuchsen 50 kann dann der Kassettenrahmen 12 nach oben verschoben werden. Dabei steht die komplette Länge des Gewindeeinstellbolzens 42, die sich in der Fig. 2 oberhalb des Halteabschnitts 36 befindet, als Einstellbereich zur Verfügung.

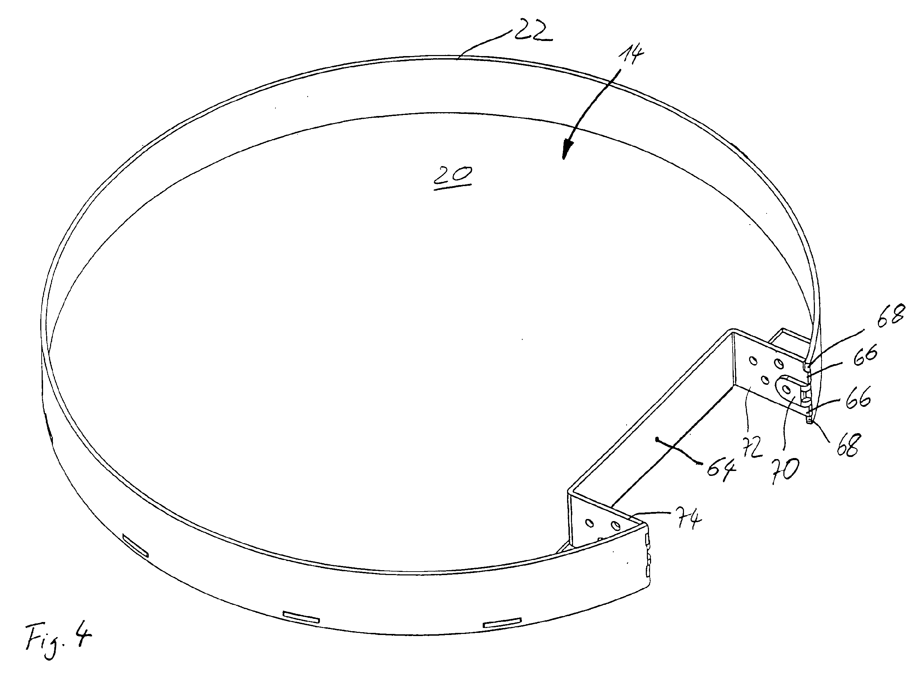

In der Darstellung der Fig. 4 ist der Deckel 14 perspektivisch dargestellt, jedoch ohne die Schnurauslassklappe 24. Gut zu erkennen ist, dass der Deckel 14 die Deckelgrundplatte 20 und den damit verbundenen Rand 22 aufweist. Im Unterschied zum Rand des Kassettenrahmens läuft der Rand 22 des Deckels 14 nicht um 360° um, sondern lässt einen Umfangsbereich für die Anordnung der Schnurauslassklappe frei. Zur Anordnung der Schnurauslassklappe ist ein seitlich offener, dreiseitiger Rahmen mittels eines gegenüber der Grundplatte 20 senkrecht abgewinkelten Materialstreifens 64 gebildet. Der Materialstreifen 64 bildet drei Seiten eines rechteckigen Rahmens, der in radialer Richtung der Grundplatte 20 nach außen geöffnet ist. Die radial außenliegenden Schmalseiten des den offenen Rahmen bildenden Materialstreifens 64 sind jeweils mit zwei Vorsprüngen 66 versehen, die zwischen sich eine Ausnehmung definieren. Der obere Vorsprung 66 ist darüber hinaus von der Oberkante des Materialstreifens 64 beabstandet. Die Schmalseiten des den Rand 22 des Deckels 14 bildenden Materialstreifens sind jeweils mit an der Ober- bzw. Unterkante liegenden kurzen Vorsprüngen 68 sowie mit einem zentral angeordneten Vorsprung 70 versehen. In eine Ausnehmung zwischen einem Vorsprung 68 und dem zentralen Vorsprung 70 ist jeweils ein Vorsprung 66 aufgenommen. Durch die Vorsprünge 66, 68 und 70 wird dadurch ein Formschluss zwischen dem Materialstreifen 64 und dem Rand 22 erzielt. Zur Sicherung dieser Formschlussverbindung wird der zentrale Vorsprung 70 im wesentlichen rechtwinklig umgebogen, so dass er parallel zu einem Abschnitt 72 bzw. 74 des Materialstreifens 64 verläuft. An diesen Abschnitt 72 bzw. 74 des Materialstreifens 64, die die kürzeren Seiten des dreiseitigen Rahmens zum Aufnehmen der Schnurauslassklappe bilden, wird der Vorsprung 70 dann befestigt, beispielsweise durch Einsetzen einer Blindniete. Die Grundplatte 20 und der Rand 22 bilden dadurch eine sehr stabile Einheit, in die auch schwere Bodenbeläge, beispielsweise Steinplatten, eingelegt werden können.

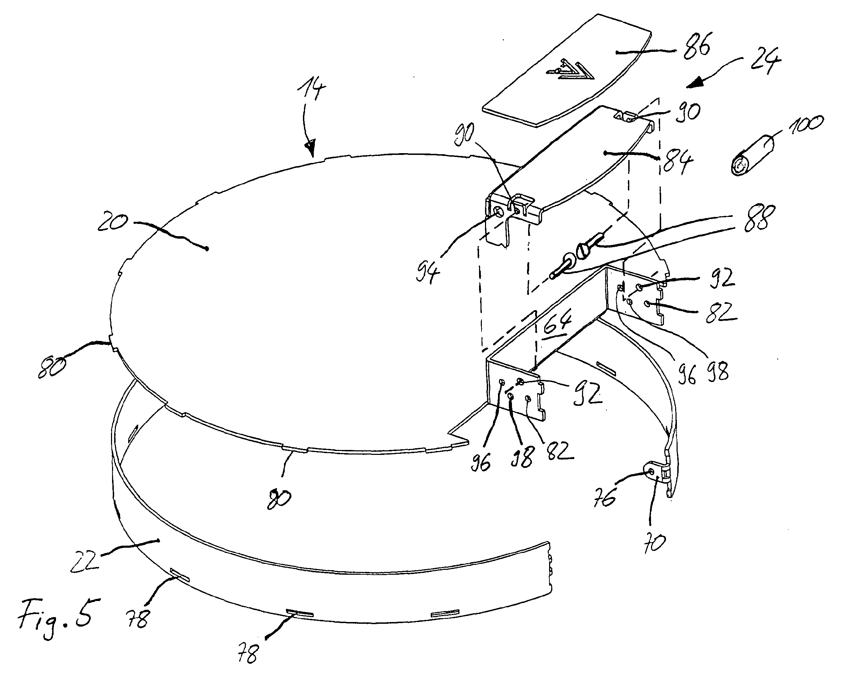

Die Darstellung der Fig. 5 zeigt den Deckel 14 in auseinandergezogener Darstellung. Die Montage des Randes 22 an der Grundplatte 20 erfolgt in ähnlicher Weise wie im Zusammenhang mit der Fig. 3 beschrieben. Der Rand 22 ist aus plattenförmigen Material mittels eines Lasers ausgeschnitten und wird daraufhin rund gebogen, so dass er in die an der Grundplatte 20 montierte Stellung vorgespannt ist. Die zentralen Vorsprünge 70 an den Schmalseiten des den Rand 22 bildenden Materialstreifens sind gegenüber dem Materialstreifen selbst abgewinkelt und weisen jeweils eine Bohrung 76 zur Aufnahme eines Blindniets auf. Um das Abbiegen des zentralen Vorsprungs 70 zu erleichtern und eine definierte Biegekante zu schaffen, ist dieser lediglich über zwei Stege mit dem Materialstreifen verbunden, die zwischen sich eine Ausnehmung definieren.

Im Bereich einer Längsseite des den Rand 22 bildenden Materialstreifens sind rechteckförmige Ausnehmungen 78 vorgesehen, die über passend geformte rechteckförmige Vorsprünge 80 am Umfang der Grundplatte 20 geführt werden. Nach dem Eingreifen aller Vorsprünge 80 in die Ausnehmungen 78 und dem Einrasten der Vorsprünge 66, 68 und 70 in die entsprechenden Ausnehmungen sind die Grundplatte 20 und der Rand 22 formschlüssig verbunden und bilden eine stabile Einheit. Die Verbindung des Randes 22 mit der Grundplatte 20 wird durch Setzen eines Blindniets in die Bohrung 76 des Vorsprungs 70 und die Bohrung 82 im Materialstreifen 64 gesichert.

Nach Verbindung der Grundplatte 20 mit dem Rand 22 kann die Schnurauslassklappe 24 in den dreiseitigen Rahmen, der durch den Materialstreifen 64 gebildet ist, eingesetzt werden. Die Schnurauslassklappe 24 weist ein Klappenteil 84 auf, das an seiner, im Einbauzustand sichtbaren Oberfläche mit einem Zierblech 86 versehen ist. Das Zierblech 86 wird auf das Klappenteil 84 beispielsweise aufgepunktet.

Das Klappenteil 84 wird mittels zweier Zylinderschrauben 88 schwenkbar an dem Materialstreifen 64 der Grundplatte 20 gelagert. Hierzu ist das Klappenteil 84 mit zwei auf einer Schwenkachse liegenden Gewindebohrungen 90 versehen, in die jeweils eine Zylinderschraube 88 eingedreht wird. Die Zylinderschrauben 88 werden dabei lediglich so weit eingedreht, dass ihr Ende sich noch innerhalb der Gewindebohrung 90 befindet und nicht seitlich über das Klappenteil 84 hinaus steht. Daraufhin wird das Klappenteil 84 in den dreiseitigen offenen Rahmen, der durch den Materialstreifen 64 gebildet ist, eingesetzt und die Zylinderschrauben 88 werden weiter in die Gewindebohrungen 90 eingedreht, bis ihre Enden in den Bohrungen 92 an den Stirnseiten des dreiseitigen Rahmens zu liegen kommen. Dadurch ist das Klappenteil 84 schwenkbar an dem Deckel 14 angeordnet. Da die Zylinderschrauben 88 von der Innenseite des Klappenteils 84 in die Bohrungen 92 am Materialstreifen 64 eingedreht werden, kann die Schnurauslassklappe auch dann noch problemlos gewechselt werden, wenn der Deckel 14 bereits mit einem Bodenbelag versehen ist. Dadurch kann die Schnurauslassklappe 24 bei Beschädigung problemlos ausgewechselt werden.

Das Klappenteil 84 weist zwei weitere, einander gegenüberliegende Bohrungen 94 auf, die zur Anordnung von Hülsen 100 vorgesehen sind, in denen eine federbelastete Kugel verschiebbar untergebracht ist. Die in der Hülse 100 angeordnete federbelastete Kugel kann, je nach Stellung der Schnurauslassklappe 84, in die Positionsbohrungen 96 oder 98 des Materialstreifens 64 einrasten. Die Bohrungen 96 sind dabei einer geschlossenen Stellung der Schnurauslassklappe 24 und die Bohrungen 98 einer geöffneten Stellung der Schnurauslassklappe 24 zugeordnet. Lediglich eine der in den Bohrungen 94 anzuordnenden Hülsen 100 mit federbelasteter Kugel ist schematisch in Fig. 5 angedeutet.

## Patentansprüche

1. Geräteeinsatz mit einem Kassettenrahmen (12) zum Aufnehmen von Instaflationsgeräten und einem auf den Kassettenrahmen (12) aufsetzbaren Deckel (14), wobei der Kassettenrahmen (12) und/oder der Deckel (14) eine Grundplatte (20, 28) und einen im wesentlichen senkrecht zur Grundplatte (20, 28) angeordneten und mit dieser verbundenen Rand (22, 18) aufweisen, **dadurch gekennzeichnet, dass** der Rand (22, 18) einen Materialstreifen aufweist und die Grundplatte (80, 56) und der Materialstreifen mittels zueinander passender Vorsprünge (80, 56) und/oder Ausnehmungen (78, 58) formschlüssig miteinander verbunden sind.

2. Geräteeinsatz nach Anspruch 1, **dadurch gekennzeichnet, dass** der Materialstreifen an seiner Schmalseite mit wenigstens einem Vorsprung (60) und an seiner anderen Schmalseite mit wenigstens einer passenden Ausnehmung (62) versehen ist, wobei der Vorsprung (60) im an der Grundplatte (28) montierten Zustand des Materialstreifens in eine Hinterschneidung der Ausnehmung (62) eingreift.

3. Geräteeinsatz nach einem der vorstehenden Ansprüche, **dadurch gekennzeichnet, dass** der Materialstreifen in die dem montierten Zustand an der Grundplatte (20, 28) entsprechende Position vorgespannt ist.

4. Geräteeinsatz nach einem der vorstehenden Ansprüche, **dadurch gekennzeichnet, dass** die Grundplatte (20, 28) im wesentlichen kreisförmig ist und an ihrem Umfang sich radial nach außen erstreckende und in der Ebene der Grundplatte (20, 28) rechteckförmige Vorsprünge (80, 56) aufweist, die formschlüssig in Ausnehmungen (78, 58) des Materialstreifens eingreifen.

5. Geräteeinsatz nach einem der vorstehenden Ansprüche, **dadurch gekennzeichnet, dass** der Kassettenrahmen (12) ein als einstückiges Blechbiegeteil ausgebildetes Basisteil (26) aufweist, das die Grundplatte (28) und von dieser ausgehende abgebogene Rastleitern (30) aufweist.

6. Geräteeinsatz nach einem der vorstehenden Ansprüche, **dadurch gekennzeichnet, dass** das Basisteil (26) als einstückiges Blechbiegeteil ausgebildet ist und Mittel (32) zum Abstützen des Kassettenrahmens (12) auf einer Oberfläche aufweist, die wenigstens einen von der Grundplatte (28) ausgehenden abgekröpften Materialstreifen aufweisen, der einen ersten, senkrecht zur Grundplatte (28) verlaufenden Stützabschnitt (34), einen sich an den ersten Stützabschnitt (34) anschließenden, im wesentlichen parallel zur Grundplatte (28) verlaufenden Halteabschnitt und einen zweiten Stützabschnitt aufweist, der sich ausgehend von dem Halteabschnitt (36) wieder in Richtung auf die Grundplatte (28) erstreckt und dessen Ende in unmittelbarer Nähe der Grundplatte (28) angeordnet ist.

7. Geräteeinsatz nach Anspruch 6, **dadurch gekennzeichnet, dass** der zweite Stützabschnitt (38) in einem Winkel kleiner als 180°, insbesondere 90 °, zum ersten Stützabschnitt (34) angeordnet ist.

8. Geräteeinsatz nach Anspruch 6 oder 7, **dadurch gekennzeichnet, dass** der Halteabschnitt (36) mit einer Gewindebuchse (40) versehen und in axialer Verlängerung der Gewindebuchse (40) in der Grundplatte (28) eine Ausnehmung angeordnet ist.

9. Geräteeinsatz nach einem der vorstehenden Ansprüche, **dadurch gekennzeichnet, dass** der Deckel (14) mit einem aufklappbaren Schnurauslass versehen ist, die Grundplatte (20) des Deckels (14) als Blechbiegeteil ausgebildet ist und einen senkrecht zur Ebene der Grundplatte (20) abgebogenen Blechstreifen (64) aufweist, der seinerseits drei Teilabschnitte (72, 74) aufweist, die drei miteinander verbundene Seiten eines rechteckförmigen Rahmens zum Aufnehmen einer Schnurauslassklappe (24) bilden.

10. Geräteeinsatz, nach einem der vorstehenden Ansprüche, **gekennzeichnet durch** Mittel zum höhenvariablen Abstützen eines Basisteils zur Aufnahme von Installationsgeräten auf einer Oberfläche.

11. Geräteeinsatz nach Anspruch 10, **dadurch gekennzeichnet, dass** die Mittel zum höhenvariablen Abstützen an dem Basisteil angeordnete Eingreifmittel (40) für Einstellbolzen (42) aufweisen, die gegenüber einer Grundplatte (28) des Basisteils (26) um wenigstens den vorgesehenen maximalen Höhenverstellbereich abgesenkt sind und dass in axialer Verlängerung der Einstellbolzen in der Grundplatte (28) des Basisteils (26) eine Ausnehmung (54) vorgesehen ist.

12. Geräteeinsatz nach Anspruch 10 oder 11, **dadurch gekennzeichnet, dass** die Einstellbolzen (42) an ihrem, einer Bodenoberfläche zugewandten Ende mit einem Kopf versehen sind, an dem ein plattenförmiges Fußelement (44) mittels aus der Grundfläche des Fußelements (44) herausgebogener Vorsprünge befestigt ist.

13. Geräteeinsatz, nach einem der vorstehenden Ansprüche, mit einem Deckel (14) mit einer Schnurauslassklappe (24), **dadurch gekennzeichnet, dass** die Schnurauslassklappe (24) mittels zweier, vom Innenraum der Schnurauslassklappe her in eine Wandung des Deckels (14) einbringbaren Lagerzapfen (88) schwenkbar an dem Deckel (14) gelagert ist.

## Claims

1. Apparatus holder with a cassette frame (12) for receiving installation devices, and an attachable lid (14) on said cassette frame (12), wherein cassette frame (12) and/or lid (14) feature/s a base plate (20, 28), and a rim (22, 18), essentially located perpendicularly and connected to the base plate (20, 28), **characterised in that** the rim (22, 18) features a material strip, and the base plate (80, 56) and the material strip are form-fitted together by means of projections (80, 56) and/or cut-outs (78, 58).

2. Apparatus holder according to Claim 1, **characterised in that** the material strip is provided with at least one projection (60) on its narrow side and with at least a fitting cut-out (62) on its other narrow side, wherein the projection (60) engages in the cut-out (62) undercut in the mounted state of the material strip on the base plate (28).

3. Apparatus holder according to one of the preceding claims, **characterised in that** the material strip is prestressed on the base plate (20, 28), in a position corresponding to the mounted state.

4. Apparatus holder according to one of the preceding claims, **characterised in that** the base plate (20, 28) is essentially circular and features rectangular projections (80, 56) on its circumference, said projections extending radially outwards and in the plane of the base plate (20, 28), said projections engaging in the cut-outs (78, 58) of the material strip in form-fit.

5. Apparatus holder according to one of the preceding claims, **characterised in that** the cassette frame (12) features a base (26) formed as one bent sheet-metal part, which features the base plate (28) and catch ladders (30) projecting from said plate in a bent manner.

6. Apparatus holder according to one of the preceding claims, **characterised in that** the base (26) is formed as one bent sheet-metal part and features means (32) that support one surface of the cassette frame (12), which at least features a bent material strip that starts from the base plate (28), which features a first support section (34) that runs perpendicular to the base plate (28), a holding section that connects on the first support section (34) and essentially runs parallel to the base plate (28) and a second support section that starts from the holding section (36) and again extends in the direction towards the base plate (28) and its end is located directly near the base plate (28).

7. Apparatus holder according to Claim 6, **characterised in that** the second support section (38) is located at an angle smaller than 180°, particularly 90°, to the first support section (34).

8. Apparatus holder according to Claim 6 or 7, **characterised in that** the holding section (36) is provided with a screw bushing (40) and in the axial extension of the screw bushing (40) a cutout is located in the base plate (28).

9. Apparatus holder according to one of the preceding claims, **characterised in that** the lid (14) is provided with a foldout cord outlet, the base plate (20) of the lid (14) is formed as bent sheet-metal part and features a sheet-metal strip (64) bent perpendicular to the plane of the base plate (20), which on the other hand features three part sections (72, 74) that form three interconnected sides of a rectangular frame for receiving a cord outlet flap (24).

10. Apparatus holder according to one of the preceding claims **characterised by** means of variable-height support of a base for receiving installation devices on a surface.

11. Apparatus holder according to Claim 10, **characterised in that** the means of variable-height support feature engagement means (40) for adjusting bolts (42) located on the base, which are at least lowered by the intended maximum height adjustment range relative to a base plate (28) of the base (26) and that in axial extension of the adjusting bolt in the base plate (28) of the base (26) a cut-out (54) is provided.

12. Apparatus holder according to Claim 10 or 11, **characterised in that** the adjusting bolts (42) on their end facing a bottom surface are provided with a head on which a plate-shaped foot element (44) is fastened by means of projections bent out from the base surface of the foot element (44).

13. Apparatus holder according to one of the preceding claims, with a lid (14) with a cord outlet flap (24), **characterised in that** the cord outlet flap (24) is pivoted by means of two mounting pins (88) pivotally attached to the lid (14) insertable from inner space of the cord outlet flap in a wall of the lid (14).

## Revendications

1. Support d'appareil comprenant un cadre de cassette (12) destiné à loger des appareils d'installation et comprenant un couvercle (14) pouvant être posé sur le cadre de cassette (12), le cadre de cassette (12) et/ou le couvercle (14) présentant une plaque de base (20, 28) et un bord (22, 18) disposé essentiellement perpendiculairement par rapport à la plaque de base (20, 28) et raccordé à celle-ci, **caractérisé en ce que** le bord (22, 18) présente une bande de matériau et **en ce que** la plaque de base (80, 56) et la bande de matériau sont raccordées entre elles au moyen de saillies (80, 56) et/ou d'évidements correspondant les uns aux autres et/ou par adhérence de forme.

2. Support d'appareil selon la revendication 1, **caractérisé en ce que** la bande de matériau est munie sur son côté étroit d'au moins une saillie (60) et sur son autre côté étroit d'au moins un évidement correspondant (62), la saillie (60), lorsque la bande de matériau est montée sur la plaque de base (28), ayant prise dans une contre-dépouille de l'évidement (62).

3. Support d'appareil selon l'une quelconque des revendications précédentes, **caractérisé en ce que** la bande de matériau est précontrainte dans la position correspondant à l'état monté sur la plaque de base (20, 28).

4. Support d'appareil selon l'une quelconque des revendications précédentes, **caractérisé en ce que** la plaque de base (20, 28) est essentiellement circulaire et présente sur sa circonférence des saillies (80, 56) s'étendant en direction radiale vers l'extérieur et rectangulaires dans le plan de la plaque de base (20, 28), ces saillies ayant prise par adhérence de forme dans des évidements (75, 58) de la bande de matériau.

5. Support d'appareil selon l'une quelconque des revendications précédentes, **caractérisé en ce que** le cadre de cassette (12) présente une pièce de base (26) exécutée en tant que pièce en tôle pliée d'une seule pièce, cette pièce de base présentant la plaque de base (28) et des échelles d'enclenchement (30) courbées, partant de la plaque de base.

6. Support d'appareil selon l'une quelconque des revendications précédentes, **caractérisé en ce que** la pièce de base (26) est exécutée comme pièce en tôle pliée d'une seule pièce et présente des moyens (32) destinés à soutenir le cadre de cassette (12) sur une surface, ces moyens présentant au moins une bande de matériau coudée partant de la plaque de base (28), la bande de matériau présentant une première section d'appui (34) s'étendant perpendiculairement à la plaque de base (28), une section de maintien se raccordant à la première section d'appui (34) et s'étendant essentiellement parallèlement à la plaque de base (28) et une deuxième section d'appui qui, partant de la section de maintien (36), s'étend de nouveau en direction de la plaque de base (28) et dont l'extrémité est disposée à proximité directe de la plaque de base (28).

7. Support d'appareil selon la revendication 6, **caractérisé en ce que** la deuxième section d'appui (38) est disposée dans un angle inférieur à 180°, notamment dans un angle de 90°, par rapport à la première section d'appui (34).

8. Support d'appareil selon la revendication 6 ou 7, **caractérisé en ce que** la section de maintien (36) est munie d'un manchon fileté (40) et **en ce qu'**un évidement est disposé dans la plaque de base (28) en prolongement axial du manchon fileté (40).

9. Support d'appareil selon l'une quelconque des revendications précédentes, **caractérisé en ce que** le couvercle (14) est muni d'une sortie de cordon ouvrable, **en ce que** la plaque de base (20) du couvercle (14) est exécutée en tant que pièce en tôle pliée et **en ce qu'**elle présente une bande de tôle (64) pliée perpendiculaire au plan de la plaque de base (20), cette bande de tôle présentant de son côté trois sections partielles (72, 74) qui forment trois côtés, reliés entre eux, d'un cadre rectangulaire destiné à loger un clapet de sortie de cordon (24).

10. Support d'appareil selon l'une quelconque des revendications précédentes, **caractérisé par** des moyens pour le support, variable en hauteur, d'une pièce de base destinée à loger des appareils d'installation sur une surface.

11. Support d'appareil selon la revendication 10, **caractérisé en ce que** les moyens pour le support variable en hauteur présentent des moyens de prise (40), disposés sur la pièce de base, pour des boulons de réglage (42) qui, par rapport à une plaque de base (26) de la pièce de base (26), sont enfoncés d'au moins la partie de réglage en hauteur maximale prévue, et **en ce qu'**un évidement (54) est prévu dans la plaque de base (28) de la pièce de base (26), dans le prolongement axial des boulons de réglage.

12. Support d'appareil selon la revendication 10 ou 11, **caractérisé en ce que** les boulons de réglage (42) sont munis d'une tête sur leur extrémité tournée vers une surface de fond, sur laquelle tête est fixé un élément de pied (44) en forme de plaque au moyen de saillies sortant de la surface de base de l'élément de pied (44) en étant pliées.

13. Support d'appareil selon l'une quelconque des revendications précédentes, comprenant un couvercle (14) muni d'un clapet de sortie de cordon (24), **caractérisé en ce que** le clapet de sortie de cordon (24) est logé de manière pivotante sur le couvercle (14) au moyen de deux tourillons (88) insérables dans une paroi du couvercle (14) depuis l'espace intérieur du clapet de sortie de cordon.
